# EUROPÄISCHE PATENTSCHRIFT

(11) **EP 1 412 426 B1**
(45) Veröffentlichungstag und Bekanntmachung des Hinweises auf die Patenterteilung: **13.06.2007**
(21) Anmeldenummer: 02760219.2
(22) Anmeldetag: 03.07.2002
(51) Int. Cl.: C08K 5/00

(54) **BENZOTHIOPHEN-2-CYCLOHEXYLCARBOXAMID-S,S-DIOXID ENTHALTENDE SCHIMMELRESISTENTE DICHTSTOFF-FORMULIERUNGEN**
MILDEW-RESISTANT SEALING COMPOUND FORMULATIONS CONTAINING A BENZOTHIOPHENE-2-CYCLOHEXYLCARBOXAMIDE-S,S-DIOXIDE
COMPOSITIONS POUR JOINTS D'ETANCHEITE RESISTANT A LA MOISISSURE CONTENANT DU S,S-DIOXYDE DE BENZOTHIOPHENE-2-CYCLOHEXYLCARBOXAMIDE

(30) Priorität: 11.07.2001 DE 10133545
(43) Veröffentlichungstag der Anmeldung: 28.04.2004
(73) Patentinhaber: GE Bayer Silicones GmbH & Co. KG, 51368 Leverkusen (DE); Bayer Aktiengesellschaft, 51368 Leverkusen (DE)
(72) Erfinder: WACHTLER, Peter, 47800 Krefeld (DE); PUTZER, Markus, Alexander, 51381 Leverkusen (DE); AUGUSTIN, Thomas, 51065 Köln (DE); PREUSS, Krystyna, 51375 Leverkusen (DE)
(86) Internationale Anmeldenummer: PCT/EP2002/007320
(87) Internationale Veröffentlichungsnummer: WO 2003/006543

(56) Entgegenhaltungen:
- EP-A- 0 504 630
- DE-A- 10 046 265
- DE-A- 19 741 403
- US-A- 5 244 893
- US-A- 5 434 198
- US-A- 5 622 546

## Beschreibung

Die Erfindung betrifft die Anwendung von Benzothiophen-2-cyclohexylcarboxamid-S,S-dioxid in Dichtstoffen (Dichtmassen), insbesondere in Siliconmassen zur Herstellung von schimmelresistenten Dichtstoffen, insbesondere von bei Raumtemperatur neutral vernetzenden Einkomponenten-Siliconkautschukmischungen.

Dichtstoffmischungen, beispielsweise solche auf der Basis von Silicon, werden häufig von Schimmelpilzen befallen, die den Abbau der Dichtstoffe, beispielsweise den Abbau von den in ihnen enthaltenden Spalt- bzw. Nebenprodukten oder adsorbierten Rückständen wie Alkoholen oder organischen Säuren für ihren eigenen Stoffwechsel nutzen können. Besonders hoch ist die Wahrscheinlichkeit eines Pilzbefalls, wenn beispielsweise Siliconkautschukmischungen erhöhter Feuchtigkeit ausgesetzt werden, wie sie z.B. im Sanitärbereich vorkommt. Hier können Schimmelpilze eine unansehnliche, gefärbte und unhygienische Oberfläche der Dichtstoffe verursachen. In besonderer Weise sind hiervon Einkomponenten-Siliconkautschukmischungen, im folgenden RTV-1K-Massen genannt, betroffen, da sie im Sanitärbereich den gebräuchlichsten Dichtstofftyp verkörpern. Die in RTV-1K-Massen verwendbaren Fungizide sind stark limitiert, da nur wenige allen Bedürfnissen dieser Anwendung gerecht werden. Die fungizide Wirkung eines Materials kann z.B. gemäß ISO 846 gegenüber Penicillium funicolosum, Chaetomium globosum, Paecilomyces variotii, Aspergillus niger und Gliocladium virens getestet werden. Die Liste der Pilze muss erweitert werden, wenn andere Pilzarten bei einer speziellen Anwendung relevant sind. Trotz der gewünschten Toxizität der Fungizide gegenüber den Schimmelpilzen sollte die toxische Wirkung auf den menschlichen Organismus so gering wie möglich sein. Die Löslichkeit in Wasser sollte gering sein, um ein vorzeitiges Auswaschen der aktiven Spezies aus der Dichtstoffmatrix zu verhindern. Desweiteren muss die aktive Spezies mit der unvernetzten Dichtstoffmischung, beispielsweise der RTV-1K-Masse chemisch verträglich sein, um eine fungizide Wirksamkeit auch nach längerer Lagerung der Siliconkautschukmischungen zu gewährleisten. Das eingesetzte Fungizid sollte die Aushärtungseigenschaften, die Haftung auf bestimmten Substraten sowie die Farbe des Dichtstoffs nicht beeinträchtigen. Besonders bei transparenten und nur schwach gefärbten Versionen werden bei Fungizidzugabe Verfärbungen der RTV-1K-Massen beobachtet. Verfärbungen, die durch Fungizide verursacht werden, treten im besonderen bei neutral vernetzenden RTV-1K-Dichtmassen auf. Neutralsysteme können auf der Basis von Oxim-Vernetzern (Beispiele in EP-A-0 118 030 und EP-A-0 316 591), Benzamid-Vemetzem (Beispiele in EP-A-0 553 143) und von Alkoxy-Vernetzern (Beispiele in DE-A-195 49 425, US 4,417,042 und EP-A-0 327 847) konstruiert werden.

In Dichtstoffen eingesetzte Fungizide umfassen diverse chemische Verbindungsklassen. Als Beispiele sind aufzuführen:
1.) N-(Fluordichlormethylthio)phthalimid (Handelsnamen: Fluor-Folpet, Preventol A3),
2.) Methyl-benzimidazol-2-ylcarbamat (Handelsname: Carbendazim, Preventol BCM)
3.) 10,10'-Oxy-bisphenoxarsin (Handelsname: Vinyzene , OBPA)
4.) Zink-bis(2-pyridylthio-1-oxid) (Zink Pyrithion)
5.) 2-(4-Thiazolyl)-benzimidazol
6.) N-Phenyl-iodpropargylcarbamat
7.) N-Octyl-4-isothiazolin-3-on
8.) 4,5-Dichlor-2-n-octyl- 4-isothiazolin-3-on
9.) N-Butyl-1,2-benzisothiazolin-3-on
10.) Triazolyl-Verbindungen wie Tebuconazol in Kombination mit silberhaltigen Zeolithen (EP 931 811 und EP 640 661)

Diese Fungizide sind unter bestimmten Bedingungen in Siliconkautschukmischungen einsetzbar, jedoch ist ihre Verwendbarkeit beschränkt. BCM zeigt keine zufriedenstellende Wirkung gegenüber Alternaria alternata, eine Pilzart, die z.B. gerade im häuslichen Sanitärbereich häufig vertreten ist. OBPA neigt dazu, relativ schnell ausgewaschen zu werden, und muss aufgrund seiner chemischen Beschaffenheit in die Klasse der arsenhaltigen metallorganischen Verbindungen eingeordnet werden, was die Frage nach der ökologischen Verträglichkeit aufwirft. Zink Pyrithion verursacht eine Verfärbung des ausgehärteten Dichtstoffmaterials, wenn die Dichtung mit Eisenionen aus dem Leitungswasser in Kontakt gebracht wird. Fluor-Folpet ist nicht zufriedenstellend wirksam gegenüber Trichoderma viride und verursacht in den oben genannten neutral vernetzenden RTV-1K-Massen starke Verfärbungen oder führt sogar zu Vernetzungsstörungen. Eine solche chemische Unverträglichkeit wird auch bei den bisher nicht diskutierten Fungiziden der oberen Liste gefunden. Die Mitverwendung von Silberionen-haltigen Zeolithen führt zu Einschränkungen bei der Farbgebung und ist kostentreibend.

Die Anwendung anderer hochwirksamer neuer Fungizide im Materialschutz ist oftmals durch ethische Vorbehalte, z.B. einer exklusiven Verwendung für die Humanmedizin, zum jetzigen Zeitpunkt unmöglich oder die notwendige Wirkkonzentration in der Matrix ist wirtschaftlich uninteressant.

Der Erfindung liegt die Aufgabe zugrunde, ein wirtschaftlich nutzbares Fungizid bereitzustellen, welches in Dichtstoffen, beispielsweise in neutral vernetzenden Silicone Dichtstoff-Formulierungen zum Schutz gegen ein breites Band von Pilzen, inbesondere auch Alternaria alternata, eingesetzt werden kann, die vorstehenden Nachteile nicht aufweist, nicht vorzeitig ausgewaschen wird und chemisch verträglich gegenüber den Formulierungen ist.

Überraschenderweise wurde nun gefunden, dass das Fungizid Benzothiophen-2-cyclohexylcarboxamid-S,S-dioxid, im folgenden Text nur weiter als Preventol VP OC 3061 bezeichnet, in Dichtstoff-Formulierungen eingesetzt werden kann. Preventol VP OC 3061 wird hierbei bevorzugt in Dichtstoffmischungen auf Siliconbasis, Urethanbasis und/oder auf Acrylbasis eingesetzt.

Gegenstand der Erfindung sind daher Benzothiophen-2-cyclohexyl-carboxamid-S,S-dioxid enthaltende Dichtstoffe, die die Nachteile bisheriger Fungizide bei der Farbgebung, der Breite des Wirkungspektrums, insbesondere Alternaria alternata, sowie der beschränkten Lagerfähigkeit dieser Dichtstoffformulierungen vor der Anwendung nicht aufweisen.

Wird Preventol VP OC 3061 in Silicon-, Urethan- oder Acryldichtstoffe eingearbeitet, so zeigen ausgehärtete Dichtstoff-Testplatten ("Felle") sowohl im frischen Zustand als nach Wässerung, d.h. wiederholtem Wasserkontakt, gute fungizide Wirkung gegenüber allen nach ISO 846 getesteten Pilzarten (Penicillium funicolosum, Chaetomium globosum, Paecilomyces variotii, Aspergillus niger und Gliocladium virens). Ein wichtiger Vorteil des Einsatzes von Preventol VP OC 3061 in Dichtstoffen ist seine Wirksamkeit gegen Alternaria alternata, ein Pilz, der in der ISO 846 nicht aufgelistet ist, aber gerade in Räumen hoher Luftfeuchtigkeit anzutreffen ist. Dabei führt Preventol VP OC 3061 in diesen Dichtstoffen zu keinerlei Verfärbungen oder zur Beeinträchtigung der Lagerstabilität. Auch die mechanischen Eigenschaften der Dichtstoffe werden nicht beeinträchtigt.

Preventol VP OC 3061 und seine Herstellung werden in der EP-A-0 512 349 der Bayer AG beschrieben. Spezielle Anwendungen in Dispersionsfarben, also Anstrichmitteln, oder im Pflanzenschutzbereich wurden in der DE-A-43 28 074 sowie in der EP-A- 0 512 349 beschrieben. Ein Hinweis auf die Einsatzmöglichkeit in Dichtstoffen und die zu wählenden Bedingungen für die wirksame Nutzung gegen insbesondere Alternaria alternata finden sich dort nicht.

Erfindungsgemäß können sämtliche übliche Dichtstoffe im ungehärteten oder bei unter 60°C gehärteten Zustand schimmelresistent gemacht werden. Bevorzugt handelt es sich um Dichtstoffe auf Silicon-, Urethan- oder Acrylbasis oder um Gemische davon. Beispiele für Silicondichtstoffe werden in den zuvor zitierten Patenten wie EP-A-0 118 030, EP-A-0 316 591, EP-A-0 327 847, EP-A-0 553 143, DE-A-195 49 425 und US 4 417 042 sowie Ullmann's Encyclopedia of Industrial Chemistry, sixth Ed. 2001 Electronic Release chapter 5, R.D. Grant: Silicone Sealants In The Polymeric Materials Encylopedia 1996 CRC Press, Inc., Urethan-Dichtstoffe in Ullmann's Encyclopedia of Industrial Chemistry, sixth Ed. 2001 Electronic Release chapter 4 sowie J.R. Panek u. J.P. Cook: Construction Sealants and Adhesives 3rd Ed. J. Wiley & Sons 1991 New York S. 129-138 sowie US 5,077,360 genannt.

Als Dichtstoffe sollen Materialien gemäß DIN EN 26 927 verstanden werden, die im Gegensatz zu den Anstrichmitteln in dickeren Schichten als diese aufgetragen werden und damit ein anders Verdampfungsverhalten ihrer Bestandteile beim Aushärten aufweisen. Unter Dichtstoffen sollen hier auch insbesondere diejenigen verstanden werden, die plastisch oder elastisch (zu Elastomeren) als Dichtstoff aushärten. Elastomeren sind gemäß Römpp Chemie Lexikon in DIN 7724 definiert. Für diese wegen ihrer elastomeren Eigenschaften stark verformbaren Dichtstoffe stellt der Schutz ihrer veränderlichen Oberfläche eine besondere Herausforderung dar. Beispiele für Acryldichtstoffe finden sich in J.R. Panek u. J.P. Cook: Construction Sealants and Adhesives 3rd Ed. J.Wiley & Sons 1991 New York S.159-175 sowie WO 01-09249 oder US 5,077,360.

Es handelt sich dabei bevorzugt um bei Raumtemperatur vernetzende Systeme, wie beispielsweise in US 5,077,360 oder EP-A-0 327 847 offengelegt.

Es kann sich um mehrkomponentige Systeme handeln, in denen Katalysator und Vernetzer getrennt vorliegen können wie beispielsweise US 4,891,400, US 5,502,144 oder andere sogen. Silicone RTV 2K-Systeme, insbesondere Platin-freie Systeme.

Bevorzugt sind jedoch Einkomponentensysteme. Darunter versteht man Systeme, wie in J.R. Panek u. J.P. Cook, s.o. S. 168 ff und Ullmann's Encyclopedia of Industrial Chemistry, sixth Ed. 2001 Electronic Release chapter 5 beschrieben, die in der Lagerform unter Ausschluß von Luftfeuchtigkeit oder Luftsauerstoff alle zum Aufbau einer Dichtungsmasse notwendigen Bestandteile enthalten und nach Einwirkung von Umgebungsluft, nachdem man sie z.B. durch Auspressen (Extrudieren) an den Einsatzort verbracht hat, aushärten.

Besonders bevorzugt sind sogen. Silicone-Neutralsysteme, nämlich DE-A-195 49 425, US 4,417,042 oder EP-A-0 327 847, in denen die Umsetzung von Vernetzern mit dem Wasser der Umgebungsluft nicht zu korrosiven sauren, basischen oder geruchsintensiven Spaltprodukte führt.

Diese Systeme sind z.B. in den eingangs genannten Literaturstellen beschrieben worden. Die Aufgabe, Siliconekautschuk-Systeme wirksam gegen alle Pilzarten zu schützen, stellt sich durchaus unterschiedlich dar, weil jedes System mit typischen Silan-Vernetzern zur Aushärtung gebracht wird und damit typische weitere Inhaltsstoffe aufweist.

Zusätzlich eingebrachte Wirkstoffe dürfen somit weder mit der noch nicht vernetzten Masse (Lagerform) noch mit der zur Vernetzung bereitgestellten Masse derartige Wechselwirkungen eingehen, dass deren bestimmungsgemäße Anwendung behindert wird.

Die Dichstoffsyteme können alle für die einzelnen Dichtmassen typischen Zusatzstoffe enthalten, wie die typischen Verdickungsmittel, verstärkenden Füllstoffe, Vernetzer, Vernetzungskatalysatoren, Pigmente, Haftmittel, oder sonstigen Volumenextender.

Bevorzugte Formulierungen für die Anwendung der erfinderischen Fungizide sind die in den Beispielen beschriebenen Zusammensetzungen. Einschränkungen bezgl. der Wirksamkeit bei den erfinderischen Fungiziden können sich aus ungewöhnlichen Reaktionen zwischen Fungizid und Vernetzern bzw. Katalysatoren ergeben sowie extremen pH- oder Temperaturbedingungen ergeben. Andere Begrenzungen stellen die wechselseitigen Löslichkeiten zwischen Fungizid und Dichstoff dar.

Preventol VP OC 3061 kann zu jedem Zeitpunkt in die ungehärteten Dichtstoffe eingearbeitet werden. Dies erfolgt beispielsweise durch Eindispergieren, beispielsweise nach Verwendung üblicher Dispergiereinrichtungen, wie Kugelmühlen, oder leistungsfähiger Mischer, wie Knetern, Planetenmischern unter Ausschluß von Feuchtigkeit und Sauerstoff. Es können Vormischungen in einem Teil der Dichtmassen oder einer oder mehreren Komponenten oder einem Teil davon hergestellt werden. Hierzu können auch übliche Hilfsstoffe eingesetzt werden, wie z.B. Trägermaterialien, wie hydrophobe Kieselsäure bzw. andere Silikate. Preventol liegt als Feststoff vor, der mit Hilfe der anorganischen Trägermaterialien einfacher und schneller dispergiert werden kann.

Es sind aber auch Behandlungen vernetzter, gehärteter Oberflächen eingeschlossen, in dem man Lösungen von Preventol aufbringt, die den Wirkstoff per Diffusion bzw. Quellung in die Matrix transportieren, wobei anschließend das Lösungsmittel mehr oder weniger vollständig anwesend bleibt. Die Menge an zugesetztem Preventol VP OC 3061 kann vom Fachmann leicht je nach Anwendungsgebiet und Zusammensetzung der Dichtstoffe bestimmt werden. Sie liegt beispielsweise bei 0,15 - 6,0 Gew.% , hier bevorzugt jedoch bei 0,5 bis 3,0 Gew.-% bezogen auf die fertige Zusammensetzung.

Gegebenenfalls kann Preventol VP OC 3061 auch zusammen mit anderen Wirkstoffen, z.B. auch im Gemisch mit weiteren Fungiziden, Akarizide oder Insektiziden eingesetzt werden.

Es hat sich überraschenderweise gezeigt, daß trotz der erfahrungsgemäß meist begrenzten Einsatzmöglichkeiten von geeigneten Fungiziden für härtbare Dichtstoffe, mit Preventol VP OC 3061 sowohl vergilbungsfreie Massen bereitgestellt werden können, die einen hohen Schutz gegen ein breites Spektrum von Fungi aufweisen, als auch Massen, die lagerfähig und zum gewünschten Zeitpunkt vernetzbar sind.

Die folgenden Beispiele dienen zur Erläuterung der Erfindung, ohne jedoch begrenzend zu wirken.

### Beispiel 1:

Eine Fungizid-Vormischung wurde durch gleichmäßiges Dispergieren von 500 Gew.-Teilen Benzothiophen-2-cyclohexylcarboxamid-S,S-dioxid mit 60 Gew.-Teilen hydrophober Kieselsäure (Fa. Degussa-Hüls, Handelsname "Aerosil® R972") in 1440 Gew.-Teile eines *ahpha, omega-*trimethyl-terminierten Polydimethylsiloxanes, welches sich durch eine Viskosität von 20 mPa.s bei 25 °C auszeichnete, mit Hilfe einer Kugelmühle hergestellt.

### Beispiel 2:

Dieses Beispiel beschreibt die Herstellung eines fungiziden, neutral vernetzenden RTV-1K-Dichtstoffes auf der Basis eines Alkoxy-Vernetzers.

55,4 Gew.-Teile eines *ahpha*, *omega*-hydroxyl-terminierten Polydimethylsiloxans, welches sich durch eine Viskosität von 80 Pa.s bei 25 °C und einem Schergeschwindigkeitsgefälle D = 1 s⁻¹ auszeichnete, wurden mit 28,4 Gew.-Teilen eines *alpha*, *omega*-trimethyl-terminierten Polydimethylsiloxans mit einer Viskosität von 100 mPa.s (25 °C D = 1 s⁻¹) in einem Planetenmischer vermischt. Alle Inhaltsstoffe sowie die Masse selbst wurden vor Luftfeuchtigkeit geschützt. 0,25 Gew.-Teile Mono-2-ethylhexylphosphorsäureester, 0,2 Gew.-Teile Methanol und 2,94 Gew.-Teile Vinyltrimethoxysilan (VTMS) wurden nacheinander eingerührt. Nach zehn Minuten wurden sukzessiv 10,3 Gew.-Teile Kieselsäure hydrophobe Kieselsäure, die unter der Bezeichnung Aerosil® R 972 von der Firma Degussa-Hüls bezogen werden kann, zugegeben. Nach dem Dispergieren der Kieselsäure homogen unter Vakuum , gab man 1,0 bzw. 1,5 Gew.-Teile der Fungizid-Vormischung aus Beispiel 1, 1,37 Gew.-Teile eines *ahpha,omega*-(diethoxy-3-propylamin)-terminiertes Dodecamethylmethylhexasiloxans und 0,39 Gew.-Teile einer Lösung aus 45 % Dioctylzinnoxid in Tetrapropylsilicat hinzu und rührte diese bei hoher Drehzahl des Mixers ein. Es wurde eine farblose, transparente und standfeste RTV-1K-Masse erhalten, die rasch in Kartuschen umgefüllt und, um sie vor Luftfeuchtigkeit zu schützen, rasch verschlossen wurde.

Proben dieser Formulierung wurden in Aluminiumtuben abgefüllt, luftdicht verschlossen und bei 50 °C gelagert, um die Alterung zu beschleunigen. Nach zwei Wochen Lagerung kühlte man die Tuben auf Raumtemperatur und fertigte aus den Dichtmassen 2 mm dicke Testplatten ("Felle") an. Die Pasten waren immer noch transparent und zeigten ein normales Durchhärtungsverhalten. In einer Testreihe wurde die fungizide Wirkung der ausgehärteten Elastomere bestätigt. Die Ergebnisse dieses Tests, bei dem neben den in ISO 846 vorgeschriebenen Pilzarten auch gegenüber Atlernaria alternata getestet wurde, sind in Tabelle 1 zusammengestellt. Die Alkoxy-Elastomere mit Preventol VP OC 3061 zeigen sowohl im frischen Zustand als auch nach Wässerung, d.h. im Auswaschverhalten nach simuliertem Wasserkontakt, gute fungizide Wirkung gegenüber allen getesteten Pilzarten (einschließlich Alternaria altemata).

### Beispiel 3:

Dieses Beispiel beschreibt die Herstellung eines fungiziden, vernetzenden RTV-1K-Dichtstoffes auf der Basis eines Acetoxy-Vernetzers. 56 Gew.-Teile eines *ahpha,omega-*hydroxyl-terminierten Polydimethylsiloxans, welches sich durch eine Viskosität von 80 Pa.s bei 25 °C auszeichnet, wurden mit 30 Gew.-Teilen eines *ahpha, omega*-trimethyl-terminierten Polydimethylsiloxans mit einer Viskosität von 100 mPa.s bei 25 °C in einem Planetenmischer vermischt. Alle Inhaltsstoffe sowie die Masse selbst werden vor Luftfeuchtigkeit geschützt. 3,7 Gew.-Teile Ethyltriacetoxysilan und 0,4 Gew.-Teile Di*ter*-butoxy-diacetoxysilan wurden nacheinander eingerührt. Nach zehn Minuten wurden sukzessiv 9,5 Gew.-Teile hydrophile Kieselsäure, die unter der Bezeichnung Aerosil® 150 von der Firma Degussa-Hüls bezogen werden kann, zugegeben. Nachdem man die Kieselsäure homogen unter Vakuum dispergiert hatte, gab man 0,0 bzw. 1,0 Gew.-Teile der Fungizid-Vormischung aus Beispiel 1 und 0,01 Gew.-Teile Dibutylzinndiacetat hinzugegeben und bei hoher Drehzahl des Mixers eingerührt. Es wurde eine farblose, transparente und standfeste RTV-1K-Masse erhalten, die rasch in Kartuschen umgefüllt und, um sie vor Luftfeuchtigkeit zu schützen, rasch verschlossen wurde.

In diesen mit dem sogen. Acetoxy-Vernetzer gehärteten Elastomeren bewirkt Preventol VP OC 3061 sowohl im frischen Zustand als nach Wässerung eine geringere fungizide Wirkung gegenüber der Gesamtheit aller getesteten Pilzarten als in Beispiel 2.

Nachfolgend wird die Testmethode beschrieben, mit der die fungizide Wirkung der Dichtstoff-Testplatten bestimmt wurde : Jeweils eine Hälfte eines Dichtstoff-"Felles" wurde mit fließendem Wasser (120 h, 20 °C Durchschnittsgeschwindigkeit: 12 l/h) ausgewaschen. Aus den unbehandelten und aus den gewässerten Testplatten werden runde Prüfkörper mit einem Durchmesser von 3 cm angefertigt. Diese Prüflinge legte man in sterile Petrischalen mit flüssigem Malzextraktagar, der zuvor mit den Testpilzen kontaminiert worden war und überschichtete sie so, dass die Agarschicht über dem Prüfling möglichst dünn blieb (ca. 1 mm).

Die Prüfung führte man als Doppelbestimmung durch. Die Lagerungstemperatur betrug 26 °C bei einer Inkubationszeit von 2-3 Wochen. Im Anschluss wurde der Test visuell nach dem unter Tabelle 2 angegebenen Bewertungsschema ausgewertet.

**Tabelle 1: Wirkungstests von Preventol VP OC 3061 im Alkoxysystem (nachdem Mischen der Dichtmasse innerhalb von 2 Wochen bewertet)**

| Probenbezeichnung¹⁾ | Wachstumsstärke²⁾: | Beurteilung Mischimpfe³⁾ : | Beurteilung Alternaria alternata: |
|---|---|---|---|
| 1,0 % F | 2 | 3 cm Hemmhof sichtbar, jedoch wächst ein Keim bis auf den Rand des Prüflings | Randbewuchs |
| 1,0 % F, gewässert | 2 | 3 cm Hemmhof sichtbar, jedoch wächst ein Keim bis auf den Rand des Prüflings | Randbewuchs |
| 1,5 % F | 2 | 4 cm Hemmhof sichtbar, jedoch wächst ein Keim bis auf den Rand des Prüflings | Randbewuchs |
| 1,5 % F, gewässert | 1-2 | 4 cm Hemmhof sichtbar, jedoch wächst ein Keim bis auf den Rand des Prüflings | 4 mm Hemmhof |

| | | | |
|---|---|---|---|
| 1) F steht für Fungizidvormischung aus Beispiel 1 mit Preventol VP OC 3061. 2) Die Einstufung der Wachstumsstärke wird in Tabelle 3 aufgeschlüsselt. 3) Die Zusammensetzung der Mischimpfe wird in Tabelle 4 beschrieben. | | | |

**Tabelle 2: Wirkungstests von Preventol VP OC 3061 im Acetoxysystem von Beispiel 3**

| Probenbezeichnung¹⁾ | Wachstumsstärke²⁾ der Mischimpfe³⁾: |
|---|---|
| 0,0 % F | 0 |
| 0,0 % F, gewässert | 0 |
| 1,0%F | 1 |
| 1,0 % F, gewässert | 1 |

| | |
|---|---|
| 1) F steht für Fungizidvormischung aus Beispiel 1 mit Preventol VP OC 3061. 2) Die Einstufung der Wachstumsstärke wird in Tabelle 3 aufgeschlüsselt. 3) Die Zusammensetzung der Mischimpfe wird in Tabelle 4 beschrieben. | |

**Tabelle 3: Bewertungsschema der Wachstumsstärke**

| Wachstums-Stärke: | Aussehen des Testmaterials: |
|---|---|
| 0 | ungenügende Schimmelfestigkeit Der Prüfling wird mit > 10 % von den Testorganismen bewachsen. |
| 1 | mäßige Schimmelfestigkeit Der Prüfling wird maximal zu 10 % von den Testorganismen bewachsen. |
| 2 | gute Schimmelfestigkeit Der Prüfling wird nicht von den Testorganismen bewachsen oder zeigt höchstens geringfügigen Bewuchs an den Rändern, es gibt keine bewuchsfreie Zone (Hemmhof) um den Prüfling. |
| 3 | (sehr) gute Schimmelfestigkeit Der Prüfling wird nicht von den Testorganismen bewachsen, es gibt eine bewuchsfreie Zone (Hemmhof) um den Prüfling. |

Erläuterung: Ein Dichtstoff-Fell ist schimmelfest, wenn es vor und nach der künstlichen Alterung / Auslaugung mit fließendem Wasser ein gleiches Erscheinungsbild / gleich große Hemmhöfe zeigt, d.h. vor und nach der Alterung mit 2 oder 3 beurteilt werden kann.

**Tabelle 4: Zusammensetzung der Mischimpfe und des Einzelkeims**

| | Schimmelpilze: | Keimeinsaat (Keime / ml Agar): |
|---|---|---|
| Mischimpfe: | Penicillium funicolosum | 5,2·10⁴ |
| | Chaetomium globosum | 2,9·10⁴ |
| | Paecilomyces variotii | 3,6·10⁴ |
| | Aspergillus niger | 1,7·10⁴ |
| | Gliocladium virens | 4,6·10⁴ |
| Einzelkeim: | Alternaria alternata | 1,0·10⁴ |

### Beispiel 4, Vergleich:

Gemäß Beispiel 2 wurden Siliconkautschukmischungen hergestellt, bei denen jedoch anstelle von 1,0 bzw. 1,5 Gew.-Teilen der Fungizid-Vormischung aus Beispiel 1 0,5 bzw. 1,0 Gew.-Teile des Fungizids 10,10'-Oxy-bisphenoxarsin zugesetzt wurde.
Proben dieser Formulierung wurden in Aluminiumtuben abgefüllt, diese wurden luftdicht verschlossen und bei 50 °C gelagert, wie im Beispiel 2. Nach zwei Wochen waren die Massen stark verfärbt.

Gemäß Beispiel 2 bzw. 3 wurde die fungizide Wirksamkeit in Tab. 5 der resultierenden Dichtstoffe bestimmt.

**Tabelle 5 : Wirkungstests von 10,10'-Oxy-bisphenoxarsin im Alkoxysystem**

| Probenbezeichnung¹⁾ | Wachstums-Stärke²⁾: | Beurteilung Mischimpfe³⁾: Probe 1 /Probe 2 | Beurteilung Alternaria Alternata: Probe 1/Probe 2 |
|---|---|---|---|
| 0,5 % F | 3 | 5 cm Hemmhof / 4-5 cm Hemmhof | 1 cm Hemmhof / 1 cm Hemmhof |
| 0,5 % F, gewässert | 3 | 2 cm Hemmhof / 1-2 cm Hemmhof | Minimaler Randbewuchs |
| 1,0 % F | 3 | 3-4 cm Hemmhof / 3-4 cm Hemmhof | 1,5 cm Hemmhof / 1-2 cm Hemmhof |
| 1,0 % F, gewässert | 3 | 5 cm Hemmhof /4-5 cm Hemmhof | Minimaler Randbewuchs |

| | | | |
|---|---|---|---|
| 1) F steht für Fungizid 10,10'-Oxy-bisphenoxarsin. 2) Die Einstufung der Wachstumsstärke wird in Tabelle 3 aufgeschlüsselt. 3) Die Zusammensetzung der Mischimpfe wird in Tabelle 4 beschrieben. | | | |

### Beispiel 5, Vergleich:

Gemäß Beispiel 2 und 3 stellt man Siliconkautschukmischungen her, bei denen jedoch anstelle von 1,0 bzw. 1,5 Gew.-Teilen der Fungizid-Vormischung aus Beispiel 1 kein Fungizid zugesetzt wurde.
Proben dieser Formulierung wurden in Aluminiumtuben abgefüllt, luftdicht verschlossen und 2 Wochen bei 50 °C gelagert, wie im Beispiel 2. Die Pasten waren transparent und zeigten ein normales Durchhärtungsverhalten.
Die Ergebnisse in den Wirkungstests, die wie in Beispiel 2 durchgeführt wurden, sind in der folgenden Tabelle 6 gezeigt.

**Tabelle 6 : Wirkungstests in reinen Alkoxy- bzw. Acetat-Systemen (ohne Fungizid) der Beispiele 2 u. 3**

| Probenbezeichnung: | Wachstums-Stärke¹⁾: | Beurteilung Mischimpfe²⁾: | Beurteilung Alternaria alternata: |
|---|---|---|---|
| Alkoxy Bsp. 2 | **0** | Vollständiger Bewuchs | Vollständiger Bewuchs |
| Alkoxy, Bsp.2 | **0** | Vollständiger Bewuchs | Vollständiger Bewuchs |
| gewässert | | | |
| Acetat Bsp. 3 | **0** | Vollständiger Bewuchs | Vollständiger Bewuchs |
| Acetat Bsp.3, | **0** | Vollständiger Bewuchs | Vollständiger Bewuchs |
| gewässert | | | |

| | | | |
|---|---|---|---|
| 1) Die Einstufung der Wachstumsstärke wird in Tabelle 3 aufgeschlüsselt. 2) Die Zusammensetzung der Mischimpfe wird in Tabelle 4 beschrieben. | | | |

### Beispiel 6 , Vergleich:

Gemäß Beispiel 2 wurden Siliconkautschukmischungen hergestellt, denen jedoch anstelle von 1,0 bzw. 1,5 Gew.-Teilen der Fungizid-Vormischung aus Beispiel 1 0,5 bzw. 1,0 Gew.-Teile einer Fungizid-Vormischung (1:1 Gew.-Teile) aus N-(Dichlorfluormethylthio)phthalimid (Handelsname: Fluor-Folpet) und Methylbenzimidazol-2-ylcarbamat (Handelsname: Carbendazim, BCM) zugesetzt wurden.
Proben dieser Formulierungen wurden in Aluminiumtuben abgefüllt, wie im Beispiel 2, luftdicht verschlossen und bei 50 °C gelagert. Nach zwei Wochen zeigten im Normklima (festgelegt in ISO 11600: 23 ± 1 °C, 50 ± 5 % relative Luftfeuchte) gelagerte Testplatten (Felle) von 2 mm Dicke keine Durchhärtung mehr.

### Beispiel 7 :

In einem Planetenmischer wurden 99 Gew.-Teile des Acrylatdichtstoffs "Bifa Acryl, schnell, regenfest", der von der Firma Kunststoff Technologie GmbH & Co. KG bezogen wurde, mit 1,0 Gew.-Teilen der Fungizid-Vormischung aus Beispiel 1 versetzt und unter Ausschluss von Luftfeuchtigkeit verrührt.
Proben dieser Formulierung wurden in Aluminiumtuben abgefüllt, diese wurden luftdicht verschlossen und 2 Wochen bei 50 °C gelagert, wie im Beispiel 2. Die Pasten waren immer noch rein weiß und zeigten ein normales Durchhärtungsverhalten.
Gemäß Beispiel 2 wurde die fungizide Wirksamkeit des resultierenden Dichtstoffs bestimmt.

**Tabelle 7: Wirkungstests von VP OC 3061 im Acryl-Dichtstoffsystem**

| Probenbezeichnung¹⁾ | Wachstumsstärke²⁾: | Beurteilung Mischimpfe³⁾: Probe 1 / Probe 2 |
|---|---|---|
| 1,0 % F | **2** | Hemmhof / Hemmhof |

| | | |
|---|---|---|
| 1) F steht für Fungizidvormischung aus Beispiel 1 mit Preventol VP OC 3061. 2) Die Einstufung der Wachstumsstärke wird in Tabelle 3 aufgeschlüsselt. 3) Die Zusammensetzung der Mischimpfe wird in Tabelle 4 beschrieben. | | |

### Beispiel 8, Vergleich:

Gemäß Beispiel 7 wurden Acrylkautschukmischungen hergestellt, bei denen jedoch anstelle von 1,0 Gew.-Teilen der Fungizid-Vormischung aus Beispiel 1 kein Fungizid zugesetzt.

Proben dieser Formulierung wurden in Aluminiumtuben abgefüllt, diese wurden luftdicht verschlossen und 2 Wochen bei 50 °C gelagert, wie im Beispiel 2. Die Pasten waren opak weiß und zeigten ein normales Durchhärtungsverhalten.Tabelle 8 : Wirkungstests im reinen Acryl-Dichtstoffsystem.

**Tabelle 8: Wirkungstests von VP OC 3061 im Acryl-Dichtstoffsystem**

| Probenbezeichnung: | Wachstumsstärke¹⁾: | Beurteilung Mischimpfe²⁾: |
|---|---|---|
| Acryl Bifa | **0** | Vollständiger Bewuchs |
| Acryl Bifa, | **0** | Vollständiger Bewuchs |
| gewässert | | |

| | | |
|---|---|---|
| 1) Die Einstufung der Wachstumsstärke wird in Tabelle 3 aufgeschlüsselt. 2) Die Zusammensetzung der Mischimpfe wird in Tabelle 4 beschrieben. | | |

## Patentansprüche

1. Dichtstoffe, enthaltend Benzothiophen-2-cyclohexylcarboxamid-S,S-dioxid.

2. Dichtstoffe nach Anspruch 1, **dadurch gekennzeichnet, dass** es sich um bei Raumtemperatur vernetzende Systeme handelt.

3. Dichtstoffe nach Anspruch 1 oder 2, **dadurch gekennzeichnet, dass** es sich um Einkomponenten-Systeme handelt.

4. Dichtstoffe nach Anspruch 1, 2 oder 3, **dadurch gekennzeichnet, dass** es sich um Silicon-, Urethan- und/oder Acryldichtstoffe handelt.

5. Verwendung von Benzothiophen-2-cyclohexylcarboxamid-S,S-dioxid als Fungizid in Dichtstoffen in Mengen von 0,25 - 3 Gew. % .

6. Verfahren zum Schutz von Dichtstoffen, **dadurch gekennzeichnet, dass** man die Dichtstoffe mit Benzothiophen-2-cyclohexylcarboxamid-S,S-dioxid versetzt oder behandelt.

7. Artikel bzw. Formkörper oder Beschichtungen, enthaltend vernetzte Dichtstoffe nach einem der Ansprüche 1 bis 4.

## Claims

1. Sealants comprising benzothiophene-2-cyclohexylcarboxamide S,S-dioxide.

2. Sealants according to Claim 1, **characterized in that** they comprise room temperature crosslinking systems.

3. Sealants according to Claim 1 or 2, **characterized in that** they comprise one-component systems.

4. Sealants according to aim 1, 2 or 3, **characterized in that** they comprise silicone, urethane and/or acrylic sealants.

5. Use of benzothiophene-2-cylohexylcarboxamide S,S-dioxide as a fungicide in sealants in amounts of 0.25-3 weight-%

6. Method for the protection of sealants, **characterized in that** the sealants are admixed or treated with benzothiophene-2-cyclohexylcarboxamide S,S-dioxide.

7. Shaped articles or coatings comprising crosslinked sealants according to any one of the Claims 1 to 4.

## Revendications

1. Produits d'étanchéité contenant du benzothiophène-2-cyclohexylcarboxamide-S,S-dioxyde.

2. Produits d'étanchéité selon la revendication 1, **caractérise en ce qu'**il s'agit de systèmes réticulant à température ambiante.

3. Produits d'étanchéité selon la revendication 1 ou 2, **caractérisé en ce qu'**il s'agit de systèmes à un composant.

4. Produits d'étanchéité selon la revendication 1, 2 ou 3, **caractérisé en ce qu'**il s'agit de produits d'étanchéité à base de silicone, d'uréthane et/ou d'acrylique.

5. Utilisation du benzothiophène-2-cyclohexylcarboxamide-S,S-dioxyde comme fongicide dans des produits d'étanchéité en des quantité de 0,25 à 3 % poids.

6. Procédé pour la protection de produits d'étanchéité, **caractérise en ce qu'**on additionne ou qu'on traite les produits d'étanchéité avec du benzothiophène-2-cyclohexylcarboxamide-S,S-dioxyde.

7. Articles, respectivement corps moulés ou enduits des produits d'étanchéité selon l'une quelconque des revendications 1 à 4.
